# EUROPÄISCHE PATENTSCHRIFT

(11) **EP 0 355 577 B1**
(45) Veröffentlichungstag und Bekanntmachung des Hinweises auf die Patenterteilung: **08.09.1993**
(21) Anmeldenummer: 89114688.8
(22) Anmeldetag: 09.08.1989
(51) Int. Cl.: B60D 1/40

(54) **Kurzkuppelvorrichtung**
Short-coupling device
Dispositif d'attelage court

(30) Priorität: 16.08.1988 DE 8810368 U; 28.11.1988 DE 8814787 U
(43) Veröffentlichungstag der Anmeldung: 28.02.1990
(73) Patentinhaber: NIENBURGER AUTOHAUS GmbH, D-31582 Nienburg (DE)
(72) Erfinder: Stoffers, Claus-Jürgen, D-3260 Rinteln (DE)
(74) Vertreter: Patentanwälte Thömen & Körner

(56) Entgegenhaltungen:
- EP-A- 0 247 919
- DE-A- 2 950 121
- DE-A- 3 235 546
- DE-A- 3 414 610
- FR-A- 2 533 172
- US-A- 2 474 986

## Beschreibung

Die Erfindung betrifft eine Kurzkuppelvorrichtung gemäß dem Oberbegriff des Patentanspruchs 1 und dem Oberbegriff des Patentanspruchs 7.

Bei einem Lastzug, der aus einem LKW und einem Anhänger besteht, ist für die Gesamtlänge nach gesetzlichen Vorschriften ein bestimmtes Längenmaß einzuhalten, wobei die Verbindung zwischen dem Lastkraftwagen (LKW) und dem Anhänger in üblicher Weise mittels einer starren Anhängergabel erfolgt, die mit ihrer Zugöse mit einer entsprechenden Kupplung am LKW befestigt ist.

Bei einer solchen starren Verbindung muß zwischen der Heckwand des LKW und der Stirnwand des Anhängers ein relativ großer Mindestabstand vorgesehen werden, um zu verhindern, daß sich bei einem Lenkeinschlag bei einer Kurvenfahrt die Heckwand des LKW und die Stirnwand des Anhängers berühren. Die Möglichkeit einer solchen Berührung besteht nur bei starken Lenkeinschlägen, während bei einer Geradeausfahrt solche Berührungen nicht zu befürchten sind. Da der Mindestabstand aber danach ausgerichtet ist, wie stark sich die Heckwand des LKW und die Stirnwand des Anhängers bei einer Kurvenfahrt nähern, ergibt sich zwangsläufig im Zustand der Geradeausfahrt ein relativ großer Abstand zwischen dem LKW und dem Anhänger.

Dieser Abstand geht bei der eingangs erwähnten vorgegebenen zulässigen Gesamtlänge eines Lastzuges aber auf Kosten der insgesamt zur Verfügung stehenden Ladefläche.

Um bei gleichbleibender vorgegebener und zulässiger Längenabmessung eines Lastzuges gleichwohl die Ladeflächenkapazität zu erhöhen, ist in dem Dokument FR-A-2 533 172 eine Kurzkuppelvorrichtung für die Verbindung eines Lastkraftwagens mit einem Anhänger vorgeschlagen, mit welcher der gegenseitige Abstand zwischen dem Lastkraftwagen und dem Anhänger bei einer Geradeausfahrt auf ein Minimum reduziert wird. Die bekannte Kurzkuppelvorrichtung umfaßt eine Verbindungsvorrichtung, insbesondere eine Zuggabel, deren Länge in Abhängigkeit davon veränderbar ist, ob eine Geradeausfahrt oder eine Kurvenfahrt erfolgt. Diese Veränderbarkeit der Länge der Zuggabel wird durch eine nahe dem Aufbauende des Anhängers quer zur Fahrtrichtung verlaufende Führungsschiene erreicht, die mit einem an der Zuggabel angeordneten Führungselement verbunden ist und den Ausschub der Verbindungsvorrichtung zwischen dem Lastkraftwagen und dem Anhänger steuert.

Die in ihrer Länge veränderbare Verbindungsvorrichtung sorgt bei der bekannten Kurzkuppelvorrichtung dafür, daß der minimale gegenseitige Aufbau-Abstand (bei einer Geradeausfahrt) sich vergrößert, wenn infolge eines Lenkeinschlages des Lastkraftwagens eine Kurvenfahrt vorgesehen ist. Wenn der Lastzug danach wieder in Geradeausfahrt geht, wird der Aufbau-Abstand umgekehrt automatisch wieder verringert, so daß sich insgesamt eine größere Ladefläche erzielen läßt.

Die bekannte Kurzkuppelvorrichtung besitzt jedoch den Nachteil, daß die quer zur Fahrtrichtung verlaufende Führungsschiene an den beiden äußeren Längsseiten des Fahrzeuges endet. Der mögliche Schwenkwinkel, also der Lenkradius, ist dadurch eingeschränkt und auf den Verlauf der an ihren Enden abgeschlossenen Führungsschiene begrenzt. Größere Schwenkwinkel bzw. engere Kurvenfahrten lassen sich nicht realisieren.

Der Erfindung liegt die Aufgabe zugrunde, eine Kurzkuppelvorrichtung der im Oberbegriff des Patentanspruchs 1 genannten Art dahingehend zu verbessern, daß sie mit einfachen mechanischen Mitteln bei einer preisgünstigen Realisierung auch größere Schwenkwinkel bzw. Lenkradien bei extremen engen Kurvenfahrten zuläßt, wobei die Kurzkuppelvorrichtung auch für einen nachträglichen Einbau geeignet sein soll.

Die Lösung dieser Aufgabe erfolgt bei der im Oberbegriff des Patentanspruchs 1 angegebenen Kurzkuppelvorrichtung durch die Merkmale des kennzeichnenden Teils des Patentanspruchs 1.

Bei der Erfindung erstreckt sich die Führungsschiene außer im Bereich der Stirnwand auch durchgehend zu je einem Teil längs der Längsseiten des Anhängers. Die quer zur Fahrtrichtung verlaufende Führungsschiene setzt sich also auch seitlich an den Längsseiten des Anhängers fort. Dadurch sind auch große Lenkeinschläge des Lastkraftwagens bzw. enge Kurvenfahrten möglich.

Bei einer zweckmäßigen Ausgestaltung der Erfindung ist der Vorderschenkel der Führungsschiene in seinem mittleren Bereich nach Art eines Bogens ausgebildet, der in Bezug auf die Anhängerstirnwand nach hinten versetzt verläuft.

Durch diese Maßnahme läßt sich bei einer Geradeausfahrt der Abstand zwischen dem LKW und dem Anhänger weiter verringern, weil dieser Abstand bei der Geradeausfahrt durch den Abstand der Führungsschiene in ihrer Mitte und der Zugöse der Zuggabel vorgegeben ist.

Da sich der Bogen der Führungsschiene zu den äußeren Längsseiten des Anhängers hin wieder zur Stirnwand erstreckt, ist gleichwohl gewährleistet, daß trotz des verringerten Abstandes bei einem Lenkeinschlag keine Berührung zwischen der Heckwand des LKW und der Stirnwand des Anhängers stattfinden kann.

Nach einer anderen vorteilhaften Ausgestaltung der Erfindung besitzt der Vorderschenkel der Führungsschiene in dem genannten mittleren Bogenbereich ein kurzes gerade und parallel zur Stirnwand des Anhängers verlaufendes Teilstück.

Durch dieses Merkmal läßt sich erreichen, daß der Abstand zwischen dem LKW und dem Anhänger bei nur geringfügigen Lenkeinschlägen bzw. Abweichungen von einer gemeinsamen geraden Achse in gewissen Grenzen unverändert bleibt, daß also der selbständige Mechanismus zur automatischen Abstandsregelung bei nur kleinen Lenkeinschlägen nicht wirksam wird. Solche ganz geringfügigen Lenkeinschläge können sich nämlich auch bei einer Geradeausfahrt einstellen, wenn man berücksichtigt, daß der Fahrer des Lastkraftwagens auch auf gerader Strecke von Natur aus immer wieder mal geringe Lenkeinschläge als Korrekturmaßnahmen vorsieht. Insgesamt wird dann der gesamte Bewegungsablauf des aus dem LKW und dem Anhänger bestehenden Lastzuges durch solche minimalen Lenkeinschläge nicht behindert. Vielmehr wird eine ruhige ausgeglichene Geradeausfahrt erreicht.

Die Erfindung betrifft ferner eine Kurzkuppelvorrichtung gemäß dem Oberbegriff des Patentanspruchs 7. Eine solche Kurzkuppelvorrichtung ist durch das Dokument DE-A-2 950 121 bekannt.

Bei dieser Kurzkuppelvorrichtung ist im Bereich der dem Anhänger zugewandten Heckwand des Lastkraftwagens eine quer zur Fahrtrichtung verlaufende Führungsschiene vorgesehen, die an den beiden äußeren Enden offen und trichterförmig ausgebildet ist.

Bei dieser Kurzkuppelvorrichtung verläßt das in der Führungsschiene geführte Führungselement die Führungsschiene bei größeren Lenkeinschlägen, so daß dann eine sichere Führung nicht mehr vorhanden ist. Wenn das Führungselement die Führungsschiene verlassen hat, kann bei sich weiter vergrößerndem Lenkeinschlag und engerer Kurvenfahrt eine Längenveränderung der Verbindungsvorrichtung der Kurzkuppelvorrichtung nicht meht stattfinden. Vielmehr erfolgt die weitere Schwenkbewegung des Führungselements mit einem konstantem Radius auf einem Kreisbogen, um zu gewährleisten, daß bei sich Verkleinerndem Lenkwinkel, wenn also die Geradeausfahrt wieder eingenommen werden soll, die Führungselemente über die äußeren trichterförmigen Öffnungen wieder in die Führungsschiene gelangen.

Da es bei dieser Kurzkuppelvorrichtung bei größeren Lenkeinschlägen einen Bereich gibt, in dem die Führungselemente nicht durch die Führungsschiene geführt sind, bedarf es besonderer aufwendiger Maßnahmen, um gleichwohl die erforderliche Stabilität der Kurzkuppelvorrichtung zu gewährleisten.

Im Hinblick auf die im Oberbegriff des Patentanspruchs 7 genannte Kurzkuppelvorrichtung liegt der Erfindung die Aufgabe zugrunde, diese Kurzkuppelvorrichtung dahingehend zu verbessern, daß sie mit einfachen mechanischen Mitteln bei einer preisgünstigen Realisierung auch große Lenkeinschläge bzw. extreme enge Kurvenfahrten ermöglicht, wobei die Kurzkuppelvorrichtung auch für einen nachträglichen Einbau bei einem bereits vorhandenen Lastkraftwagen geeignet ist.

Die Lösung dieser Aufgabe erfolgt bei der im Oberbegriff des Patentanspruchs 7 beschriebenen Kurzkuppelvorrichtung durch die Merkmale des kennzeichnenden Teils des Patentanspruchs 7.

Im Grunde genommen wird hier das gleiche Prinzip wie bei der für den Anhänger bestimmten Kurzkuppelvorrichtung angewendet, jedoch mit dem Unterschied, daß beim LKW ein Drehkranz nicht vorgesehen ist. An Stelle des Drehkranzes kommt hier eine Drehführung zur Anwendung, in welchem das Verbindungselement längsverschieblich gehalten und geführt ist.

Auch bei dieser Kurzkuppelvorrichtung wird der gegenseitige Abstand zwischen dem LKW und dem Anhänger durch die Führungsschiene geregelt und automatisch bei Lenkeinschlag eingestellt.

Wie voranstehend schon bei dem Anhänger beschrieben, ist es auch bei der LKW-Lösung möglich, den Abstand noch weiter zu verringern, indem der Vorderschenkel der Führungsschiene einen sich in Richtung nach vorne erstreckenden Bogen beschreibt.

Ein wesentlicher Vorteil der Erfindung besteht noch darin, daß bei beiden genannten Lösungen eine Führungsschiene sowohl am Anhänger als auch am LKW ein nachträglicher Einbau in wirtschaftlicher Weise möglich ist, denn die vorgesehenen Maßnahmen, insbesondere die Anbringung einer Führungsschiene, lassen sich kostengünstig und mit wenig Aufwand realisieren.

Weitere zweckmäßige Ausgestaltungen der Erfindung ergeben sich aus den Unteransprüchen, der nachfolgenden Beschreibung und der Zeichnung.

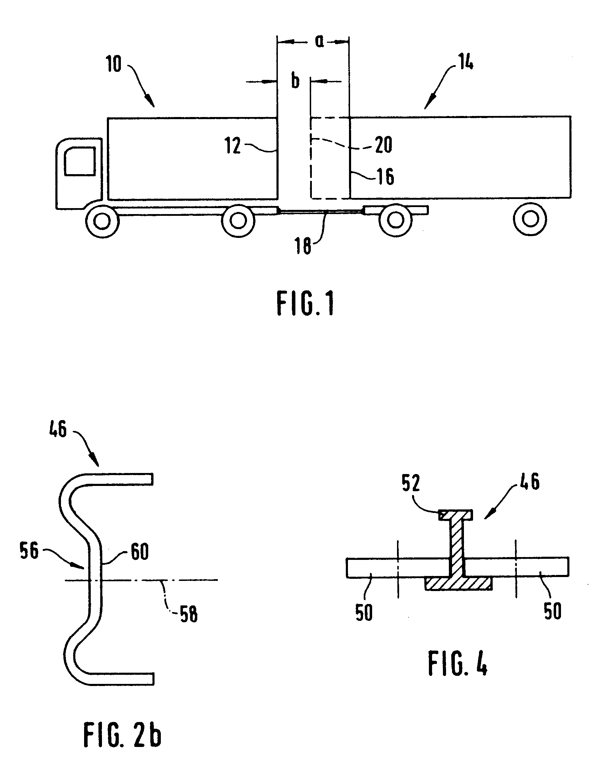

Nachfolgend wird die Erfindung anhand der in der Zeichnung dargestellten Ausführungsbeispiele näher erläutert. Es zeigen:
- Fig. 1: eine schematische Seitenansicht eines aus einem Lastkraftwagen und einem Anhänger bestehenden Lastzuges,
- Fig. 2a: eine schematische Draufsicht einer ersten Ausführungsform einer Kurzkuppelvorrichtung,
- Fig. 2b: eine andere Ausführungsform einer Führungsschiene nach Fig. 2a,
- Fig. 3: eine Seitenansicht der Kurzkuppelvorrichtung gemäß Fig. 2a,
- Fig. 4: einen Querschnitt einer Führungsschiene,
- Fig. 5: eine erste Ausführungsform einer Kurzkuppelvorrichtung für einen LKW,
- Fig. 6: eine zweite Ausführungsform einer Kurzkuppelvorrichtung für einen LKW, der mit einem ebenfalls mit einer Kurzkuppelvorrichtung versehenen Anhänger verbunden ist,
Zur Verdeutlichung der der Erfindung zugrunde liegenden Problemstellung ist in Fig. 1 ein Lastzug gezeigt, der aus einem Lastkraftwagen 10 und einer Heckwand 12 besteht, welcher einen Anhänger 14 mit einer Stirnwand 16 zieht. Dabei ist der Lastkraftwagen 10 über eine starre Anhängergabel 18 in bekannter Weise mit dem Anhänger 14 verbunden.

Bei Verwendung einer solchen starren Anhängergabel 18 ist zwischen der Heckwand 12 des Lastkraftwagens 10 und der Stirnwand 16 des Ahhängers 14 ein bestimmter Abstand a einzuhalten, um zu verhindern, daß sich die Heckwand 12 und die Stirnwand 16 bei einer Kurvenfahrt berühren.

Durch den verringerten Abstand b und die gestrichelte Linie 20 ist in Fig. 1 angedeutet, daß sich die Ladefläche des Anhängers 14 vergrößern läßt, wenn der Abstand zwischen der Heckwand 12 und der Stirnwand 16 entsprechend b verringert wird. Ein solcher verringerter Abstand b setzt aber voraus, daß bei Lenkeinschlägen - also bei Kurvenfahrt - der gegenseitige Abstand zwischen der Heckwand 12 und der Stirnwand 16 automatisch in der Weise vergrößert wird, daß sich die Heckwand 12 und die Stirnwand 16 nicht berühren, und zu diesem Zweck lassen sich Kurzkuppelvorrichtungen einsetzen.

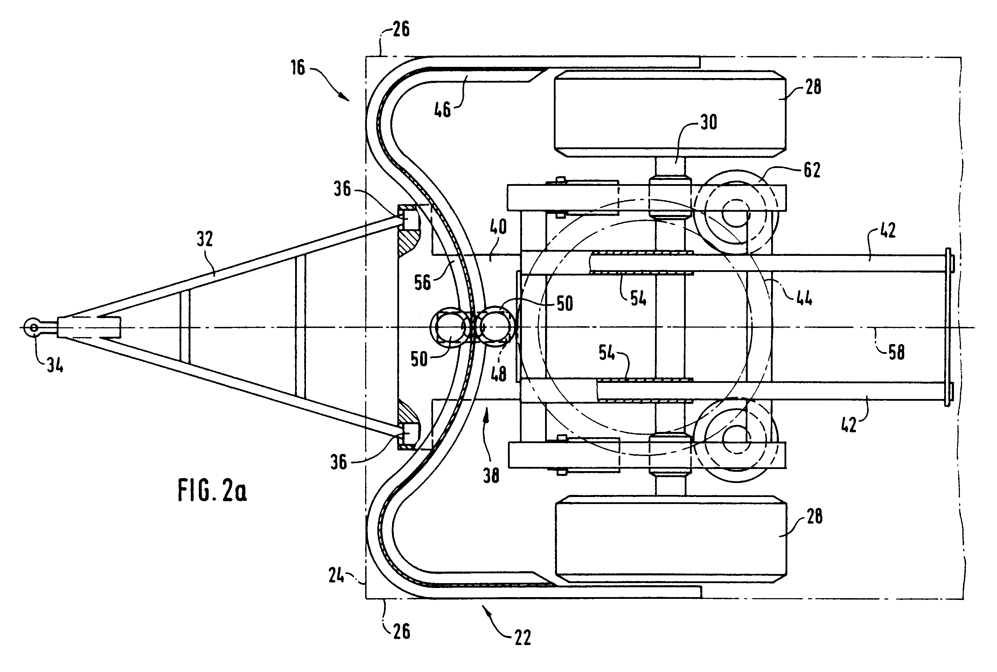

Bei der in Fig. 2a dargestellten Kurzkuppelvorrichtung ist an einem Anhänger-Chassis 22 eine Führungsschiene 46 befestigt, die sich sowohl im Bereich der Stirnwand 16 am Querträger 24 erstreckt und auch seitlich entlang der Längsträger 26 bzw. der Längsseite des Anhängers verläuft.

Der hier nur im vorderen Teil gezeigte Anhänger 14 mit den Rädern 28 und der Vorderachse 30 besitzt in an sich bekannter Weise eine Zuggabel 32 mit einer vorderen Zugöse 34. Die Zuggabel 32 ist über ein Drehlager 36 mit einem Lenkungsteil 38 verbunden, welches einen vorderen Lenkungskopf 40 und hintere Lenkungsstangen 42 umfaßt. Außerdem besitzt der Anhänger 14 in an sich bekannter Weise einen Drehkranz 44 sowie Luftbälge 62 für die Federung.

Die Führungsschiene 46 kann im Querschnitt als C-Profil, T-Profil, als Doppel-T-Profil oder auch als Rohrprofil ausgestaltet sein und steht mit entsprechend geformten Führungsrollen 50 in Eingriff, die beidseitig am Querschnittsprofil der Führungsschiene 46 anliegen.

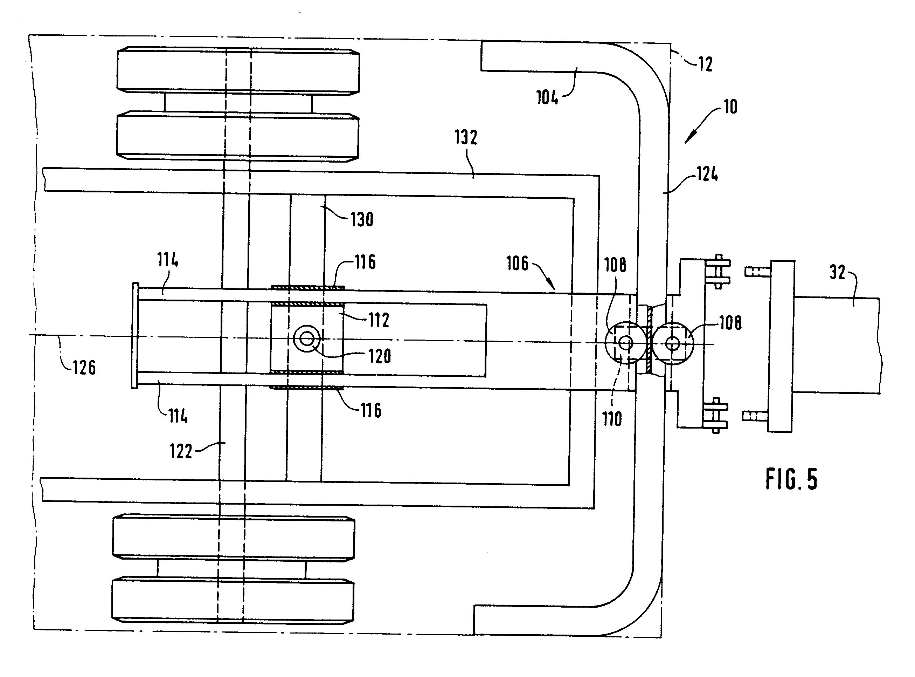

Die Führungsrollen 50 sind ihrerseits auf einer Führungsplatte 48 getragen, welche verschwenkbar auf dem Lenkungskopf 40 des Lenkungsteils 38 angeordnet ist. Fig. 4 zeigt in einer schematischen Querschnittsansicht, wie die beiden Führungsrollen 50 beidseitig an einem senkrechten T-Schenkel 52 der Führungsschiene anliegen und so mit dieser in Eingriff sind.

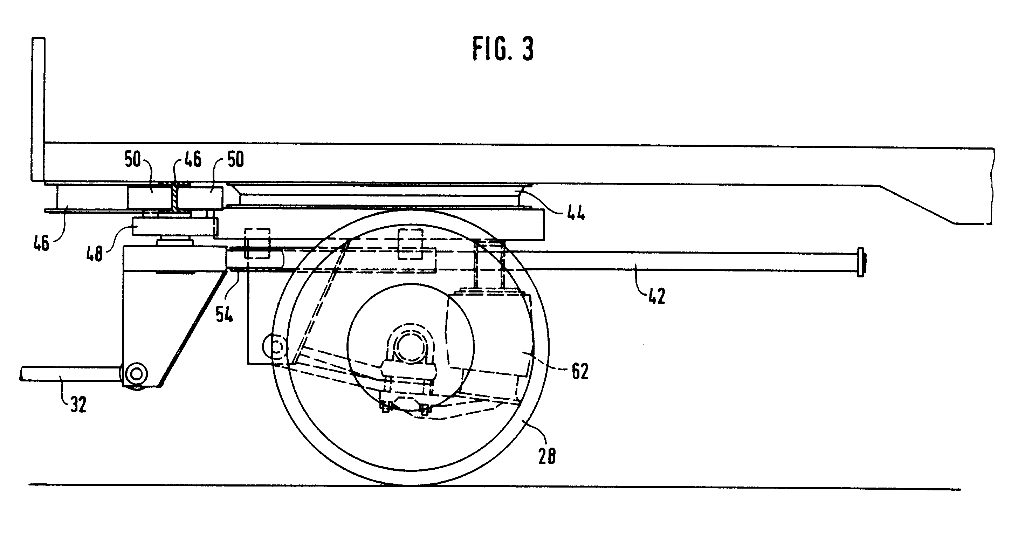

In Fig. 2 und 3 ist zu erkennen, daß das Lenkungsteil 38 mit seinen Lenkungsstangen 42 mittels zugeordneter Führungsrohre 54 im Sinne einer Gleitführung gelagert und somit längsverschieblich sind.

Die Führungsrohre 54 ihrerseits sind am Drehkranz 44 befestigt, so daß eine Lenkbewegung der Zuggabel 32 bzw. des damit verbundenen Lenkungsteils 38 auf den Drehkranz 44 und somit auf die Vorderachse 30 des Anhängers 14 übertragen werden kann.

Bei der soweit beschriebenen Kurzkuppelvorrichtung verläuft die Führungsschiene 46 gemäß Fig. 2a im mittleren Teil der Stirnwand 16 bogenförmig nach hinten versetzt. Fig. 2b zeigt demgegenüber eine andere Ausführungsform, bei welcher der Vorderschenkel 56 der Führungsschiene 46 im mittleren Bogenbereich symmetrisch zur Längsachse 58 des Anhängers 14 ein kurzes gerades Teilstück 60 besitzt. Es ist ersichtlich, daß der längsverschiebliche Lenkungsteil 38 bei einem Lenkeinschlag zwangsläufig dem Verlauf der Führungsschiene 46 folgt, wodurch gewährleistet ist, daß der Abstand zwischen dem Lastkraftwagen und dem Anhänger sich bei einer beginnenden Kurvenfahrt in gewünschter Weise vergrößert, indem sich das Lenkungsteil 38 dann nach vorne auf den Lastkraftwagen zu bewegt, wobei diese Bewegung dadurch ermöglicht wird, daß die Lenkungsstangen 42 längsverschieblich in den Führungsrohren 54 gelagert sind.

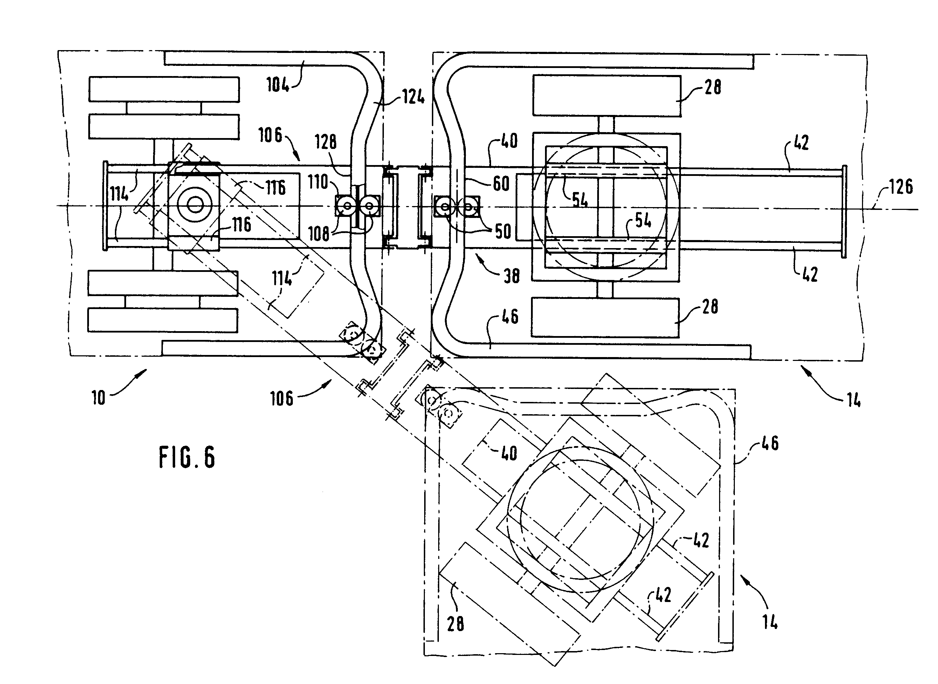

Durch die Erfindung wird ferner auch eine Kurzkuppelvorrichtung für einen Lastkraftwagen geschaffen, und hierzu zeigen Fig. 5 und 6 je ein Ausführungsbeispiel.

Es kommt im wesentlichen das gleiche Prinzip wie bei der Kurzkuppelvorrichtung für den Anhänger zur Anwendung, d.h., im Bereich der Heckwand 12 des Lastkraftwagens 10 ist in der Draufsicht U-förmig eine Führungsschiene 104 am LKW befestigt. Ferner ist ein Verbindungselement 106 vorgesehen, welches an seinem hinteren, dem Anhänger zugewandten Ende eine um eine senkrechte Achse verschwenkbare Führungsplatte 110 trägt, auf welcher wiederum zwei Führungsrollen 108 angeordnet sind, die in Eingriff mit einem Profil der Führungsschiene 104 stehen. Bei einem Lenkeinschlag folgt also das Verbindungselement 106 dem durch die Führungsschiene 104 vorgegebenen Verlauf.

An seinem vorderen Teil besitzt das Verbindungselement zwei Lenkungsstangen 114, die in einer durch Führungsrohre 116 gebildeten Gleitführung längsverschieblich geführt sind, wobei die Führungsrohre 116 an einer Drehführung 112 befestigt sind. Die Drehführung 112 ihrerseits ist um eine senkrechte Achse 120 drehbar gelagert und über diese Drehachse an einem Träger 130 zwischen den Chassisrahmen 132 ortsfest angeordnet. In dem gezeigten Ausführungsbeispiel ist der Träger 130 versetzt von der Hinterachse 122 des Lastkraftwagens angeordnet.

Bei der Ausführungsform in Fig. 6 verläuft der Vorderschenkel 124 der Führungsschiene 104 im Bereich der Heckwand bogenförmig nach vorn hin versetzt, wobei im mittleren Teil des Bogens ein gerades Teilstück 128 der Führungsschiene 104 vorgesehen ist. Dieses gerade Teilstück 128 ist symmetrisch zur Längsachse 126 mittig angeordnet.

Durch den bogenförmigen Verlauf der Führungsschiene 104 läßt sich der Abstand zwischen dem Lastkraftwagen und dem Anhänger bei Geradeausfahrt noch weiter verringern.

Besonders otpimale Verhältnisse mit einem erheblichen Gewinn an Ladefläche ergeben sich, wenn gemäß Fig. 6 sowohl beim LKW als auch beim Anhänger jeweils eine Kurzkuppelvorrichtung vorgesehen ist, wobei die beiden Führungsschienen 104 bzw. 46 in beiden Fällen bogenförmig versetzt verlaufen. Zur Verdeutlichung ist der Anhänger in Fig. 6 einmal in Geradeausfahrt und einmal bei einem Lenkeinschlag dargestellt, und wie man erkennen kann, folgen die jeweiligen Führungsrollen 50 bzw. 108 dem Verlauf der beiden Führungsschienen 46 bzw. 104 und befinden sich bei dem gezeigten Lenkeinschlag gerade an der äußeren Bogenkante. In dieser Position ist der Abstand zwischen dem Anhänger und dem LKW soweit vergrößert, daß eine Berührung der Heckwand des Lastkraftwagens und der Stirnwand des Anhängers ausgeschlossen ist.

## Patentansprüche

1. Kurzkuppelvorrichtung für die Verbindung eines Lastkraftwagens (LKW) (10) mit einem Anhänger (14) mittels eines Verbindungsgliedes, insbesondere mittels einer Zuggabel (32), wobei der Anhänger (14) ein mit seiner drehbaren Vorderachse (30) verbundenes Drehteil, insbesondere einen Drehkranz (44), besitzt, welches die Lenkung des Verbindungsgliedes auf die Vorderachse (30) überträgt, wobei der Abstand zwischen dem Lastkraftwagen (10) und der Stirnwand (16) des Anhängers (14) in Abhängigkeit vom Lenkeinschlag derart veränderbar ist, daß sich bei Geradeausfahrt ohne Lenkeinschlag ein minimaler Abstand einstellt, wobei ferner im Bereich der Stirnwand (16) des Anhängers (14) eine Führungsschiene (46) vorgesehen ist und das Verbindungsglied über Führungselemente in Eingriff mit der Führungsschiene (46) steht, so daß das Verbindungsglied in den Lenkstellungen dem Verlauf der Führungsschiene (46) folgt, und wobei das Verbindungsglied längsverschieblich am Drehteil (44) gehalten ist, **dadurch gekennzeichnet,** daß sich die Führungsschiene (46) außer im Bereich der Stirnwand (16) auch durchgehend zu je einem Teil längs der Längsseiten (26) des Anhängers (14) nach hinten erstreckt.

2. Kurzkuppelvorrichtung nach Anspruch 1, dadurch gekennzeichnet, daß die Führungsschiene (46) in der Draufsicht auf den Anhänger (14) U-förmig mit einem im Bereich der Stirnwand (16) verlaufenden Vorderschenkel (56) ausgebildet ist.

3. Kurzkuppelvorrichtung nach Anspruch 2, dadurch gekennzeichnet, daß der Vorderschenkel (56) der Führungsschiene (46) einen sich in Richtung nach hinten erstreckenden Bogen beschreibt, dessen Mitte mit der mittigen Längsachse (58) des Anhängers (14) zusammenfällt.

4. Kurzkuppelvorrichtung nach Anspruch 3, dadurch gekennzeichnet, daß der Vorderschenkel (56) im mittleren Bogenbereich ein gerade verlaufendes Teilstück (60) besitzt.

5. Kurzkuppelvorrichtung nach einem der vorhergehenden Ansprüche 1 - 4, dadurch gekennzeichnet, daß an dem Verbindungsglied (32) eine um eine senkrechte Achse (102) verschwenkbare Führungsplatte (48) befestigt ist, welche die Führungselemente (50) trägt.

6. Kurzkuppelvorrichtung nach Anspruch 5, dadurch gekennzeichnet, daß die Führungselemente durch zwei im Abstand angeordnete Führungsrollen (50) gebildet sind, welche beidseitig mit der Führungsschiene (46) in Eingriff sind.

7. Kurzkuppelvorrichtung für die Verbindung eines Lastkraftwagens (LKW) (10) mit einem Anhänger (14) mittels eines Verbindungsgliedes, insbesondere einer Zuggabel (32), wobei im Bereich der dem Anhänger (14) zugewandten Heckwand (12) des Lastkraftwagens (10) eine Führungsschiene (104) vorgesehen ist, wobei ferner ein mit dem Verbindungsglied des Anhängers (14) verbindbares Verbindungselement (106) über Führungselemente im Eingriff mit der Führungsschiene (104) steht, so daß das Verbindungselement bei Lenkeinschlägen dem Verlauf der Führungsschiene (104) folgt, und wobei das Verbindungselement längsverschieblich an einer Drehführung (112) gehalten ist, **dadurch gekennzeichnet**, daß sich die Führungsschiene (104) außer im Bereich der dem Anhänger (14) zugewandten Heckwand (12) des Lastkraftwagens (10) auch zu je einem Teil an den Längsseiten des Lastkraftwagens (10) nach vorne erstreckt.

8. Kurzkuppelvorrichtung nach Anspruch 7, dadurch gekennzeichnet, daß die senkrechte Drehachse (120) versetzt von der Hinterachse (122) des Lastkraftwagens (10) angeordnet ist.

9. Kurzkuppelvorrichtung nach Anspruch 7 und/oder 8, dadurch gekennzeichnet, daß die Führungsschiene (104) in der Draufsicht auf den Lastkraftwagen (10) U-förmig mit einem im Bereich der Heckwand (12) verlaufenden Vorderschenkel (124) ausgebildet ist.

10. Kurzkuppelvorrichtung nach einem oder mehreren der vorhergehenden Ansprüche 7 - 9, dadurch gekennzeichnet, daß der Vorderschenkel (124) der Führungsschiene (104) einen sich in Richtung nach vorne erstreckenden Bogen beschreibt, dessen Mitte mit der mittigen Längsachse (126) des Lastkraftwagens (10) zusammenfällt.

11. Kurzkuppelvorrichtung nach Anspruch 10, dadurch gekennzeichnet, daß der Vorderschenkel (124) im mittleren Bogenbereich ein gerade verlaufendes Teilstück (128) besitzt.

12. Kurzkuppelvorrichtung nach einem oder mehreren der vorhergehenden Ansprüche 7 - 11, dadurch gekennzeichnet, daß an dem Verbindungselement (106) eine um eine senkrechte Achse verschwenkbare Führungsplatte (110) befestigt ist, welche die Führungselemente (108) trägt.

13. Kurzkuppelvorrichtung nach einem oder mehreren der vorhergehenden Ansprüche 7 - 12, dadurch gekennzeichnet, daß die Führungselemente durch zwei im Abstand angeordnete Führungsrollen (108) gebildet sind, welche beidseitig mit der Führungsschiene (104) in Eingriff sind.

## Claims

1. Short coupling device for connecting a truck (10) to a trailer (14) by means of a connecting element, especially by means of a tow bar (32), wherein the trailer (14) possesses a slewing component, especially a turntable (44), connected to its slewing front axle (30), which (slewing component) transmits the steering of the connecting element to the front axle (30), wherein the distance between the truck (10) and the front wall (16) of the trailer (14) can be varied as a function of the angle of turn in such a way that, in straight forward travel with no angle of steering, a minimum distance is established, wherein furthermore a guide rail (46) is provided in the region of the front wall (16) of the trailer (14) and the connecting element is in engagement with the guide rail (46) by guide elements, so that the connecting element follows the course of the guide rail (46) in the steering positions, and wherein the connecting element is held longitudinally slidably to the slewing component (44), characterised in that the guide rail (46) extends not only in the region of the front wall (16) but also continues round some way to the rear along each of the longitudinal sides (26) of the trailer (14).

2. Short coupling device according to Claim 1, characterised in that the guide rail (46) is formed U-shaped in plan on the trailer (14) with a front arm (56) extending in the region of the front wall (16).

3. Short coupling device according to Claim 2, characterised in that the front arm (56) of the guide rail (46) describes a rearwardly extending arc, the centre of which lies on the central longitudinal axis (58) of the trailer (14).

4. Short coupling device according to Claim 3, characterised in that the front arm (56) has a straight portion (60) in the middle part of the arc.

5. Short coupling device according to one of the preceding Claims 1 to 4, characterised in that a guide plate (48), pivotal about a vertical axis (102), is fixed to the connecting element (32), which (guide plate) carries the guide elements (50).

6. Short coupling device according to Claim 5, characterised in that the guide elements are formed of two spaced apart guide rollers (50), which engage with the guide rail (46) on both sides.

7. Short coupling device for connecting a truck (10) to a trailer (14) by means of a connecting element, especially a tow bar (32), wherein, in the region of the tail wall (12) of the truck (10) facing the trailer (16), a guide rail (104) is provided, wherein furthermore a connecting element (106) which may be connected to the connecting element of the trailer (14) is in engagement with the guide rail (104) by guide elements, so that the connecting element follows the course of the guide rail (104) in angles of turn, and wherein the connecting element is held longitudinally slidably to a pivoting guide (112), characterised in that the guide rail (104) extends not only in the region of the tail wall (12) of the truck (10) facing towards the trailer (14) but also some way forwards on each of the longitudinal sides of the truck (10).

8. Short coupling device according to Claim 7, characterised in that the vertical pivot axis (120) is set back from the rear axle (122) of the truck (10).

9. Short coupling device according to Claim 7 and/or 8, characterised in that the guide rail (104) in plan on the truck (10) is formed U-shaped with a front arm (124) extending in the region of the tail wall (12).

10. Short coupling device according to one or more of the preceding Claims 7 to 9, characterised in that the front arm (124) of the guide rail (104) describes a forwardly extending arc, the centre of which lies on the central longitudinal axis (126) of the truck (10).

11. Short coupling device according to Claim 10, characterised in that the front arm (124) possesses a straight portion (128) in the middle region of the arc.

12. Short coupling device according to one or more of the preceding Claims 7 to 11, characterised in that a guide plate (110), pivotal about a vertical axis, is fixed to the connecting element (106), which (guide plate) carries the guide elements (108).

13. Short coupling device according to one or more of the preceding Claims 7 to 12, characterised in that the guide elements are formed of two spaced apart guide rollers (108), which are in engagement with the guide rail (104) on both sides.

## Revendications

1. Dispositif d'attelage court pour la liaison d'un camion (LKW) (10) et d'une remorque (14) au moyen d'un élément de raccordement, en particulier au moyen d'une flèche de remorque (32), la remorque (14) possédant une partie tournante reliée à son essieu avant pivotant (30), en particulier une couronne de pivotement (44), qui transmet la direction de l'élément de liaison à l'essieu avant (30), la distance entre le camion (10) et la paroi avant (16) de la remorque (14) étant variable en fonction du braquage de direction de sorte que dans la sortie directe sans le braquage de direction une distance minimale est réglée, en outre dans le voisinage de la paroi avant (16) de la remorque (14) un rail de guidage (46) étant prévu et l'élément de liaison étant sur l'élément de guidage en contact avec le rail de guidage (46) de manière que l'élément de liaison suive dans les positions de direction l'allure du rail de guidage (46) et l'élément de liaison étant maintenue déplaçable longitudinalement à la partie tournante, caratérisé en ce que le rail de guidage (46) se projette en dehors dans le voisinage de la paroi avant (16) aussi en continu à chaque partie le long des côtés longitudinaux (26) de la remorque (14) vers l'arrière.

2. Dispositif d'attelage court suivant la revendication 1, caractérisé en ce que, dans une vue en plan de la remorque (14), le rail de guidage (46) a une forme de U, avec une branche avant se développant dans le voisinage de la paroi avant (16).

3. Dispositif d'attelage court suivant la revendication 2, caractérisé en ce que la branche avant (56) du rail de guidage (46) comporte une courbe s'étendant vers l'arrière, dont le milieu coïncide avec l'axe longitudinal médian (58) de la remorque (14).

4. Dispositif d'attelage court suivant la revendication 3, caractérisé en ce que la branche avant (56) présente, dans la zone du milieu de la courbe, une partie droite (60).

5. Dispositif d'attelage court suivant l'une des revendications précédentes 1 à 4, caractérisé en ce qu'à l'élément de liaison (32), est fixée une plaque de guidage (48) orientable autour d'un axe perpendiculaire (102).

6. Dispositif d'attelage court suivant la revendication 5, caractérisé en ce que les éléments de guidage sont formés de deux galets de guidage (50) placés à distance et qui sont des deux côtés du rail de guidage (46) en contact avec lui.

7. Dispositif d'attelage court pour la liaison d'un camion (LKW) (10) et d'une remorque (14) au moyen d'un élément de raccordement, en particulier une flèche de remorque (32), dans le voisinage de la paroi arrière (12) du camion (10) qui est tournée vers la remorque (14) étant prévu un rail de guidage (104), en outre un élément de liaison (106) reliable à l'élément de liaison de la remorque (14) sur l'élément de guidage en contact avec le rail de guidage (104), de manière que l'élément de liaison suive dans les positions de direction l'allure du rail de guidage (104), et l'élément de liaison étant maintenu déplaçable longitudinalement à une partie tournant (112), caractérisé en ce que le rail de guidage (104) se projette en dehors dans le voisinage de la paroi arrière (12) tournée vers la remorque (14) aussi vers chaque partie sur les côtés longitudinaux du camion (10) vers l'avant.

8. Dispositif d'attelage court suivant la revendication 7, caractérisé en ce que l'axe de pivotement perpendiculaire (120) est disposé déplacé par l'axe arrière (122) du camion (10).

9. Dispositif d'attelage court suivant la revendication 7 et/ou 8, caractérisé en ce que, dans une vue en plan du camion (10), le rail de guidage (104) a une forme de U avec une branche avant (124) se développant dans le voisinage de la paroi arrière (12).

10. Dispositif d'attelage court suivant l'une ou plusieurs des revendications précédentes 7 à 9, caractérisé en ce que la branche avant (124) du rail de guidage (104) décrit une courbe s'étendant vers l'avant dont le milieu coïncide avec l'axe longitudinal médian (126) du camion (10).

11. Dispositif d'attelage court suivant la revendication 10, caractérisé en ce que la branche (124) comporte, dans la zone du milieu de la courbe, une partie droite (128).

12. Dispositif d'attelage court suivant l'une ou plusieurs des revendications précédentes 7 à 11, caractérisé en ce qu'à l'élément de liaison (106) est fixé une plaque de guidage (110) orientable autour d'un axe perpendiculaire, qui porte les éléments de guidage (108).

13. Dispositif d'attelage court suivant l'une ou plusieurs des revendications précédentes 7 à 12, caractérisé en ce que les éléments de guidage sont formés de deux galets de guidage (108) placés à distance et qui sont des deux côtés du rail de guidage (104) en contact avec lui.
